# EUROPEAN PATENT APPLICATION

(11) **EP 1 773 017 A1**
(43) Date of publication of application: **11.04.2007**
(21) Application number: 06015016.6
(22) Date of filing: 19.07.2006
(51) Int. Cl.: H04L 29/00

(54) **Method and system for notifying service information to wireless terminal**

(30) Priority: 07.10.2005 KR 20050094360
(71) Applicant: Samsung Electronics Co., Ltd., Suwon-si Gyeonggi-do (KR)
(72) Inventor: Kim, June-Yeob c/o Samsung Electronics Co., Ltd., Suwon-si Gyeonggi-do (KR)
(74) Representative: Lang, Johannes

(57) **Abstract**

A method and system for notifying service information to a wireless terminal are provided. More exact service information is provided to the wireless terminal when employing synchronization markup language (SyncML) device management (DM). The wireless terminal communicates with a server. The sever notifies the wireless terminal of information to be changed and a type of the information, and the information to be changed is updated by downloading the information to be changed from the server if update for the information to be changed is selected in the wireless terminal. Also, the wireless terminal communicating with a server is notified of information to be changed and a type of the information by the server. The wireless terminal determines a type of a user interaction mode from the notification package if the notification package is received, requests update of information while displaying the type of the information to be changed included in the notification package if the type of the user interaction mode is an information change mode selected by a user, and updates the information to be changed by downloading the information from the server if the update for the information to be changed is selected in the wireless terminal.

## Description

### BACKGROUND OF THE INVENTION

### Field of the Invention

The present invention relates to a method and system for notifying service information to a wireless terminal. More particularly, the present invention relates to a method and system for notifying service information to a wireless terminal, where substantially exact service information is provided to the wireless terminal when employing synchronization markup language (SyncML) device management (DM).

### Description of the Related Art

Generally, a wireless terminal is as an essential device capable of providing various functions in addition to a basic function such as telephone communication. In addition, the wireless terminal can be effectively managed through a synchronization markup language (SyncML) device management (DM) function, which is a management function for a wireless terminal.

The wireless terminal updates configurations for executing applications such as a WAP, a multimedia message service (MMS), and an e-mail and upgrades software through "firmware over the air (FOTA)" using the SyncML DM function.

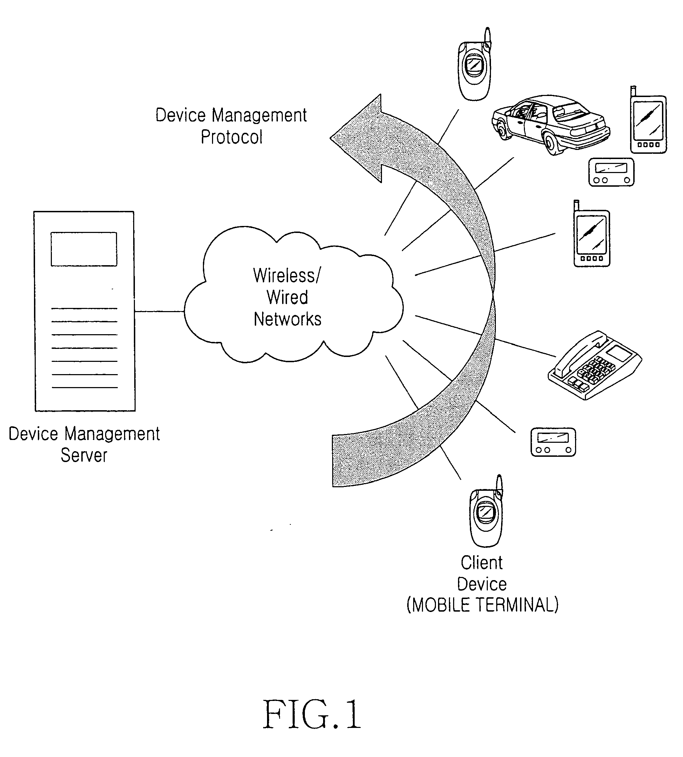

In other words, a user can update profile values for executing applications through the SyncML DM function without directly using a corresponding menu of the wireless terminal. In addition, the user can upgrade the firmware of the wireless terminal over the air (OTA) using the SyncML DM function without visiting an A/S center. FIG. 1 is a view for explaining a basic concept of the SyncML DM function.

The SyncML DM function described above is classified into a network initiated update scheme using a notification protocol and a user update scheme for executing a corresponding menu in the wireless terminal. The network initiated update scheme may be a server initiated scheme, and the user update scheme may be a user initiated scheme.

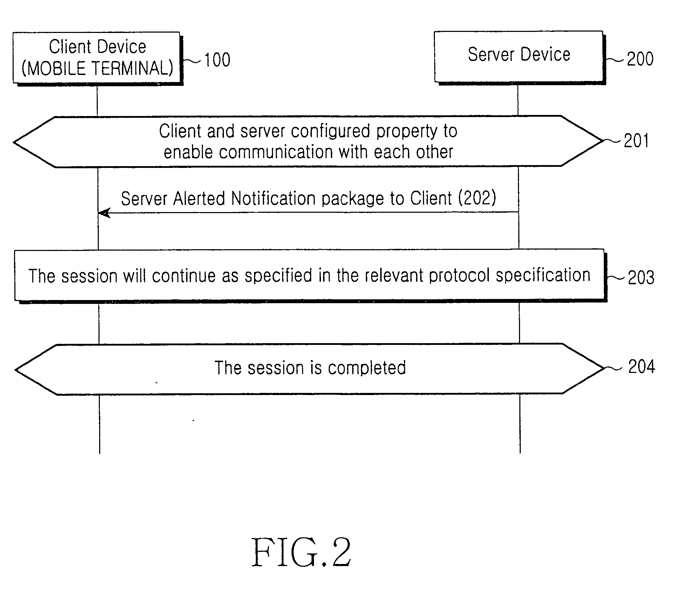

A procedure of updating information through the server initiated scheme will be described with reference to FIG. 2. FIG. 2 is a flowchart illustrating a procedure of downloading and updating by wireless terminal information to be changed from a server, and illustrating a message sequence for a server initiated session using a notification package.

If a wireless terminal 100 and a SyncML DM server 200 finish preparation for communication in step 201, the SyncML DM server 200 transmits a notification package reporting that there is information to be changed to the wireless terminal 100 in step 202.

If the SyncML DM server 200 requests the execution of device management (DM) through the transmission of the notification package, the wireless terminal 100 downloads information to be changed from the SyncML DM server 200 and updates the information by establishing a DM session in step 203. If the wireless terminal 100 completes the update of the information to be changed, the DM session is terminated in step 204.

In step 201202, the notification package, which is transmitted to the wireless terminal, is delivered in the type of a notification initiated session trigger massage.

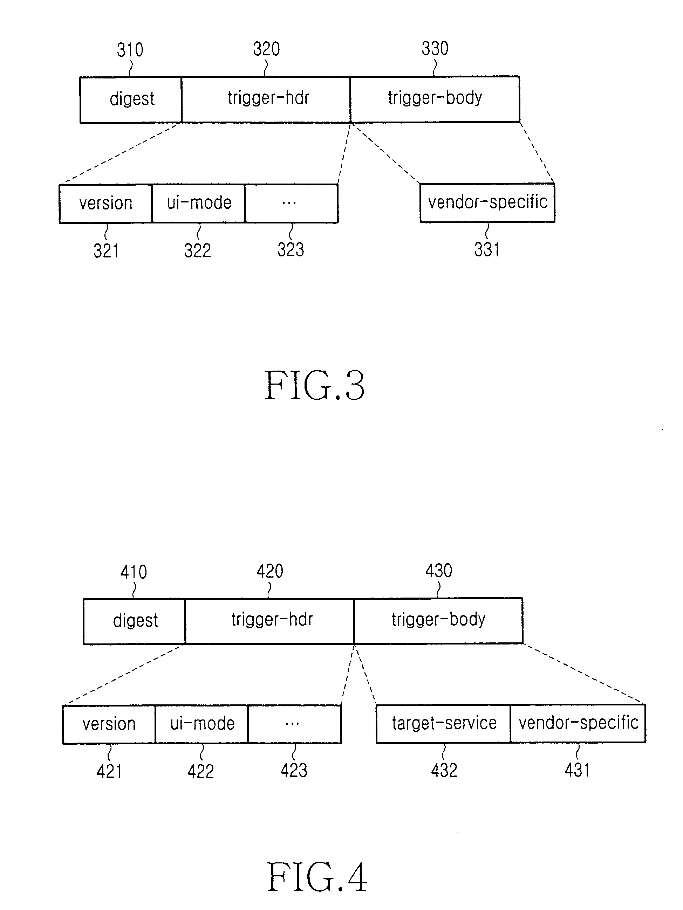

FIG. 3 illustrates the format of the notification trigger message.

Hereinafter, the formation of the notification trigger message will be described with reference to FIG. 3. The notification trigger message includes an MD5 digest field 310 for authentication, a trigger-header field 320, and a trigger-body field 330. The trigger-header field 320 includes a version field 321, a user interaction (ui) mode field 322, and a field 323 having a session identifier and a server identifier.

The information included in the trigger-header field 320 is identically used for both SyncML data synchronization (DS) and SyncML data device management (DM). The trigger-body field 330 includes a vendor specific field 331 and is differently defined for the SyncML DS and the SyncML DM.

If the wireless terminal 100 receives the trigger message from the server 200 in step 201202, the wireless terminal 100 operates according to four modes defined in the user interaction mode field 322 of the trigger message.

The four modes defined in the user interaction mode field 322 include "Not specified", "Background management action", "Informative management action", and "User Interaction before the management action".

"Not specified" indicates that no mode is specified, and "Background management action" indicates that the DM session is automatically established without any marks for a user of the wireless terminal. In addition, "Informative management action" indicates that it is reported to the user of the portable terminal that the DM session is established, and the DM session is automatically established, and "User Interaction before the management action" indicates that the user of the portable terminal can select whether or not to be establish the DM session.

However, if the wireless terminal receives the trigger message from the SyncML DM server 200 as described above, the user cannot recognize a requested service type until the DM session is established with the SyncML DM server 200.

For example, even when the wireless terminal receives notification regarding the update of a WAP profile from the SyncML DM server 200, the user of the wireless terminal cannot recognize if the notification relates to the update of the WAP profile, the update of a multimedia message service profile, or the update of a firmware. Accordingly, the user may not precisely recognize the type of requested service unless the user receives more information through connection to the SyncML DM server 200.

### SUMMARY OF THE INVENTION

Accordingly, exemplary embodiments of the present invention address the above-mentioned problems occurring in the prior art, and one of the objects of certain embodiments of the present invention is to provide a method and system for notifying service information to a wireless terminal, where a more precise service information is provided to the wireless terminal when employing synchronization markup language (SyncML) device management (DM).

According to exemplary embodiments of the present invention, there are provided a method and system for notifying service information to a wireless terminal where a wireless terminal is prepared for communicating with a server, the server notifies the wireless terminal of information to be changed and a type of the information, and the information to be changed is updated by downloading the information to be changed from the server if update for the information to be changed is selected in the wireless terminal.

According to an exemplary aspect of the present invention, there is provided a method and system for notifying service information to a wireless terminal where the wireless terminal is prepared for making communication with a server, the server notifies the wireless terminal of information to be changed and a type of the information, and a type of a user interaction mode is determined by the wireless terminal from the notification package if the notification package is received. Update of information is requested while displaying the type of the information to be changed included in the notification package if the type of the user interaction mode is an information change mode selected by a user. The information to be changed is updated by downloading the information from the server if the update for the information to be changed is selected in the wireless terminal.

### BRIEF DESCRIPTION OF THE DRAWINGS

The above and other objects, features and advantages of the present invention will be more apparent from the following detailed description taken in conjunction with the accompanying drawings, in which like reference numerals will be understood to refer to like parts, components and structures, where:
FIG. 1 is a view for explaining a basic concept of the SyncML DM function ;
FIG. 2 is a flowchart illustrating a procedure of downloading and updating by wireless terminal information to be changed from a server;
FIG. 3 illustrates the format of a notification package;
FIG. 4 illustrates the format of a notification package according to an exemplary embodiment of the present invention; and
FIG. 5 illustrates an example of the types of information to be changed included in a notification trigger message shown in FIG. 4.

### DETAILED DESCRIPTION OF EXEMPLARY EMBODIMENTS

Hereinafter, exemplary embodiments of the present invention will be described in detail with reference to the accompanying drawings. As noted above, the same or similar components in drawings are designated by the same reference numerals throughout the drawings. In the following description of the exemplary embodiments of the present invention, a detailed description of known functions and configurations incorporated herein is omitted for clarity and conciseness.

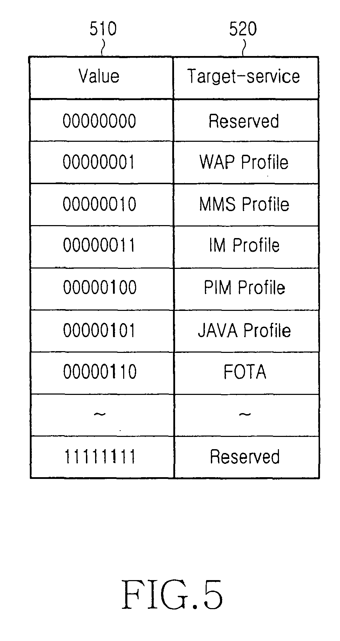

FIG. 4 illustrates a format of a notification trigger message including a notification package according to an exemplary embodiment of the present invention, and FIG. 5 illustrates types of information to be changed included in the notification trigger message shown in FIG. 4.

Hereinafter, the format of the notification trigger message will be described with reference to FIG. 4. The notification trigger message includes an MD5 digest field 410 for authentication, a trigger-header field 420, and a trigger-body field 430. The trigger-header field 420 includes a version field 421, a user interaction mode field 422, and a field 423 having a session identifier and a server identifier.

In addition, the trigger-body field 430 includes a target service field 432 and a vendor specific field 431. The target service field 432 has the type of information to be changed. FIG. 5 illustrates types 520 of information to be changed defined for the target service field 432 and values 510 representing the information to be changed. The user of the wireless terminal may recognize the type of the information to be changed based on the values 510 defined for the target service field 432 when the establishment of the DM session is requested.

The value 510 defined for the target service field 432 is formed as 8 bits, which can express the maximum of 256 types of service items. The target service field 432 may include additional service items if SyncML DM service items increase.

If a notification package transmitted to the wireless terminal from the DM server in order to report that there is information to be changed includes the notification trigger message shown in FIG. 4, and if the user interaction mode 422 of the notification trigger message is defined as the "User Interaction before the management action" enabling the user of the portable terminal to select whether or not to be establish the DM session, the wireless terminal having received the notification package displays the type of information to be changed and the request for the update of corresponding information through the establishment of the DM session.

If the user of the wireless terminal selects the establishment of the DM session, the wireless terminal downloads information to be changed from the server and updates the information.

As described above, according to exemplary embodiments of the present invention, the type of information to be changed is transmitted when it is reported to a wireless terminal that there is the information to be changed, so it is possible to provide service information to the user more precisely. In addition, the type of information to be changed is displayed in an information change mode according to the selection of the user, so a user may select not to update the information to be changed if the user does not desire the update of a corresponding service.

While the invention has been shown and described with reference to certain exemplary embodiments thereof, it will be understood by those skilled in the art that various changes in form and details may be made therein without departing from the spirit and scope of the invention. Consequently, the scope of the invention is not limited to the exemplary embodiments, but is defined by the appended claims and equivalents thereof.

## Claims

1. A method for notifying service information to a wireless terminal, the method comprising:
preparing a wireless terminal for communicating with a server;
notifying, by the server, the wireless terminal of information to be changed, and a type of the information; and
updating the information to be changed by downloading the information to be changed from the server if update for the information to be changed is selected in the wireless terminal.

2. The method as claimed in claim 1, wherein the server comprises a synchronization markup language (SyncML) device management (DM) server.

3. The method as claimed in claim 1, wherein the notifying comprises notifying the wireless terminal of the information to be changed while transmitting to the wireless terminal a notification package comprising the type of the information to be changed.

4. The method as claimed in claim 3, wherein the notification package comprises a message format comprising the type of the information to be changed.

5. A method for notifying service information to a wireless terminal, the method comprising:
preparing a wireless terminal for communicating with a server;
notifying, by the server, the wireless terminal of information to be changed and a type of the information;
determining, by the wireless terminal, a type of a user interaction mode from the notification package if the notification package is received;
requesting update of information while displaying the type of the information to be changed included in the notification package if the type of the user interaction mode is an information change mode selected by a user; and
updating the information to be changed by downloading the information from the server if the update for the information to be changed is selected in the wireless terminal.

6. The method as claimed in claim 5, wherein the server comprises a synchronization markup language (SyncML) device management (DM) server.

7. The method as claimed in claim 5, wherein the notification package comprises a message format comprising the type of the information to be changed.

8. A system for notifying service information to a wireless terminal, the system comprising:
a server; and
a wireless terminal configured for communicating with a server;
wherein the server notifies the wireless terminal of information to be changed, and a type of the information; and
the information to be changed is updated by downloading the information to be changed from the server if update for the information to be changed is selected in the wireless terminal.

9. The system as claimed in claim 8, wherein the server comprises a synchronization markup language (SyncML) device management (DM) server.

10. The system as claimed in claim 8, wherein the server notifies the wireless terminal of the information to be changed while transmitting to the wireless terminal a notification package comprising the type of the information to be changed.

11. The method system as claimed in claim 10, wherein the notification package comprises a message format comprising the type of the information to be changed.

12. The system as claimed in claim 8, wherein the wireless terminal determines a type of a user interaction mode from a notification package if the notification package is received; and
update of information is requested while displaying the type of the information to be changed included in the notification package if the type of the user interaction mode is an information change mode selected by a user.

13. The system as claimed in claim 12, wherein the server comprises a synchronization markup language (SyncML) device management (DM) server.

14. The method system as claimed in claim 12, wherein the notification package comprises a message format comprising the type of the information to be changed.
